# EUROPEAN PATENT APPLICATION

(11) **EP 2 390 019 A1**
(43) Date of publication of application: **30.11.2011**
(21) Application number: 11250354.5
(22) Date of filing: 21.03.2011
(51) Int. Cl.: B21D 28/10, B29C 45/16, H01Q 1/24, H01Q 1/40, H01Q 9/04, H01Q 9/42

(54) **Antenna radiator, method of manufacturing electronic device case having plurality of antenna pattern radiators embedded therein, and electronic device case**

(30) Priority: 31.05.2010 KR 20100051149
(71) Applicant: Samsung Electro-Mechanics Co., Ltd., Suwon, Kyungki-do (KR)
(72) Inventor: Cho, Sung Eun, Suwon Gyunggid-do (KR); Hong, Ha Ryong, Hwaseong Gyunggi-so (KR); Kim, Tae Sung, Gwanak-gu Seul (KR); Lee, Byung Hwa, Yoeongtong-su Suwon Gyunggi-so (KR); Lee, Dae Kyu, Gyunggi-do (KR); An, Chan Gwang, Gyunggi-do (KR); Sung, Jae Suk, Giheung-su Yongin Gyunggid-o (KR); Mun, Hyun Sam, Yeongtong-gu Suwon Gyunggi-do (KR); Lim, Dae Ki, Gyunggi-do (KR); Bae, Sang Woo, Gyunggi-do (KR)
(74) Representative: Powell, Timothy John

(57) **Abstract**

An antenna radiator (200) includes a plurality of antenna pattern radiators (220,320) including antenna pattern portions (222,322) adapted for receiving or transmitting an external signal, a bridge (300) configured to connect the antenna pattern portions, and a cutting assistance part formed in a connection portion between the bridge (300) and the antenna pattern portions (222,322) and facilitating detachment of the bridge from the antenna pattern portions. A method of manufacturing an electronic device case includes forming the antenna pattern radiators (220,320) with bridge (300) and forming a radiator frame (210; e.g. by injection molding), removing said bridge (300) and forming a case frame (e.g. by a second injection molding step). The antenna is simple to manufacture, is less vulnerable to external impact and increases the possible volume for antennas. The bridge (300) connects and stabilises the separate antenna pattern radiators during injection molding.

## Description

### CROSS-REFERENCE TO RELATED APPLICATIONS

This application claims the priority of Korean Patent Application No. 10-2010-0051149 filed on May 31, 2010, in the Korean Intellectual Property Office, the disclosure of which is incorporated herein by reference.

### BACKGROUND OF THE INVENTION

### Field of the Invention

The present invention relates to an antenna radiator, a method of manufacturing an electronic device case having a plurality of antenna patterns embedded therein, and an electronic device case.

### Description of the Related Art

Mobile communications terminals such as cellular phones, personal digital assistants (PDAs) and laptop computers, which support wireless communications, are indispensable devices in modern society. Functions including CDMA, wireless LANs, GSM and DMB have been added to these mobile communications terminals. One of the most important components that enable these functions is associated with antennas.

Antennas being used in these mobile communications terminals have advanced from external antennas, such as rod antennas or helical antennas, to internal antennas that are disposed inside terminals.

External antennas are susceptible to damage by external impact, while internal antennas increase the volume of terminals.

In order to solve these problems, research has been undertaken into manufacturing antennas that are formed integrally with mobile communications terminals.

In order that antennas may be formed integrally with terminals, a method of bonding flexible antennas to terminal bodies using adhesives is used. Recently, a method of forming antenna films on the outer surfaces of terminals by molding has been proposed.

However, when flexible antennas are bonded simply by using adhesives, the reliability of these antennas is reduced as the adhesiveness decreases. Besides, this also causes harm to the aesthetic appearance of the terminals, lessening emotional quality for consumers.

In addition, when antenna films are used, product stability can be ensured. However, since the antenna films are formed on the outer surfaces of electronic device cases, the elasticity of the antenna films may cause the detachment thereof from defective injection-molded objects.

In order to solve the above limitations, methods for embedding radiators in electronic device cases are being researched.

### SUMMARY OF THE INVENTION

An aspect of the present invention provides an antenna radiator, a method of manufacturing an electronic device case having a plurality of antenna pattern radiators embedded therein, and an electronic device case.

According to an aspect of the present invention, there is provided an antenna radiator including: a plurality of antenna pattern radiators including antenna pattern portions receiving or transmitting an external signal, respectively; a bridge configured to connect the antenna pattern portions; and a cutting assistance part formed in a connection portion between the bridge and the antenna pattern portions and facilitating detachment of the bridge from the antenna pattern portions.

The cutting assistance part may include a notch, a relief groove, a V-cut or a combination thereof.

Each of the antenna pattern radiators may include a connection terminal portion extending from one side of a corresponding one of the antenna pattern portions, and the connection terminal portion and the antenna pattern portion may be connected together by a connection pattern portion to be arranged in different planes.

The antenna pattern portions may each receive or transmit a signal of a different frequency band.

According to another aspect of the present invention, there is provided a method of manufacturing an electronic device case having a plurality of antenna pattern radiators embedded therein, the method including: forming a plurality of antenna pattern radiators by pressing-processing a thin metal film, the plurality of antenna pattern radiators respectively including antenna pattern portions connected by a bridge; forming an antenna pattern frame including a radiator frame having one surface on which the antenna pattern radiators are exposed; separating the antenna pattern radiators from each other on the radiator frame by removing the bridge; and forming a case frame on the antenna pattern radiators such that the antenna pattern radiators are embedded between the radiator frame and the case frame.

A cutting assistance part may be formed in each connection portion between the bridge and the antenna pattern portions, and the cutting assistance part may include a notch, a relief groove, a V-cut or a combination thereof to facilitate detachment of the bridge from the antenna pattern portions.

Each of the antenna pattern radiators may include a connection terminal portion extending from one side of a corresponding one of the antenna pattern portions, and the connection terminal portion and the antenna pattern portion may be connected together by a connection pattern portion to be arranged in different planes.

The antenna pattern portions may each receive or transmit a signal of a different frequency band.

The antenna pattern radiators may be coupled to a coupling groove, formed in the radiator frame, so as to be exposed on the one surface of the radiator frame.

The antenna pattern radiators may be subjected to injection molding so as to be exposed on the one surface of the radiator frame.

The case frame may be injection molded over the radiator frame having the antenna pattern radiators exposed on the one surface thereof.

According to another aspect of the present invention, there is provided an electronic device case manufactured by the method of manufacturing an electronic device case.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a partially cut-away schematic perspective view illustrating a case for a mobile communications terminal, which is an electronic device having a plurality of antenna pattern radiators embedded therein, according to an exemplary embodiment of the present invention;

FIG. 2 is a planar figure illustrating an antenna pattern radiator according to an exemplary embodiment of the present invention;

FIG. 3 is an enlarged view illustrating part A of FIG. 2;

FIG. 4 is an exploded perspective view illustrating an antenna pattern frame according to an exemplary embodiment of the present invention;

FIGS. 5 and 6 are schematic views illustrating a method of manufacturing an antenna pattern frame according to an exemplary embodiment of the present invention;

FIG. 7 is a schematic perspective view illustrating an antenna pattern frame manufactured by the method of manufacturing an antenna pattern frame shown in FIGS. 5 and 6; and

FIG. 8 is a schematic enlarged view showing how a bridge is detached from an antenna pattern portion in part B shown in FIG. 7.

### DETAILED DESCRIPTION OF THE PREFERRED EMBODIMENT

Exemplary embodiments of the present invention will now be described in detail with reference to the accompanying drawings. The invention may, however, be embodied in many different forms and should not be construed as being limited to the embodiments set forth herein. While those skilled in the art could readily devise many other varied embodiments that incorporate the teachings of the present invention through the addition, modification or deletion of elements, such embodiments may fall within the scope of the present invention.

The same or equivalent elements are referred to by the same reference numerals throughout the specification.

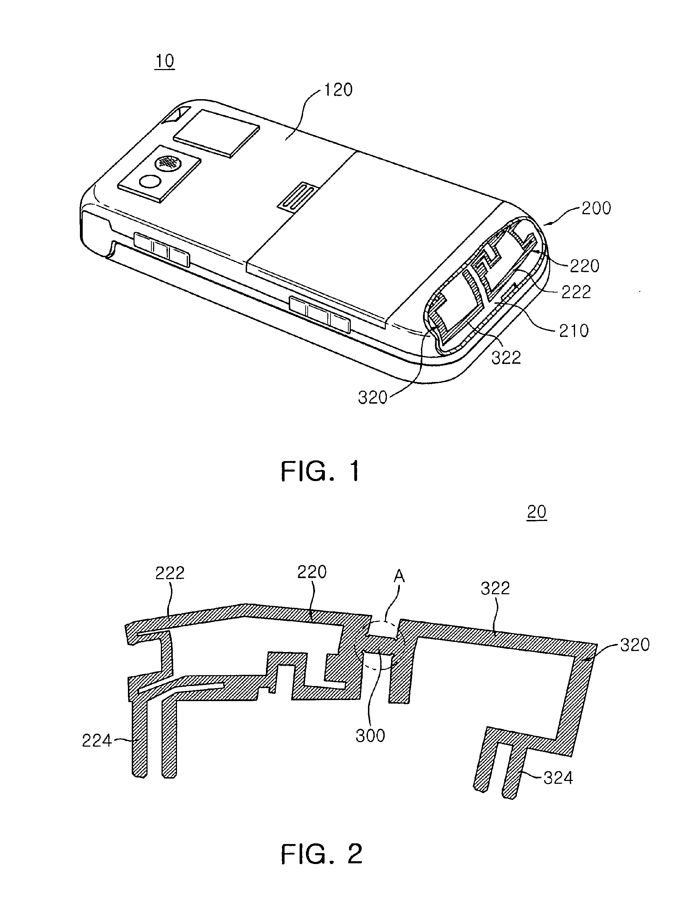

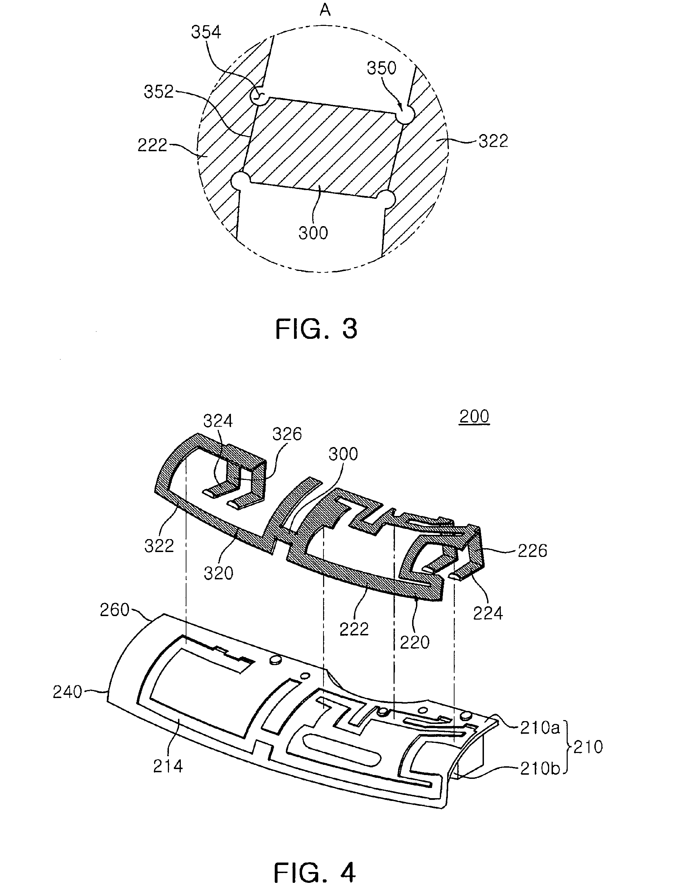

FIG. 1 is a partially cut-away schematic perspective view illustrating a case for a mobile communications terminal, which is an electronic device having a plurality of antenna pattern radiators embedded therein, according to an exemplary embodiment of the present invention. FIG. 2 is a planar figure illustrating an antenna pattern radiator according to an exemplary embodiment of the present invention. FIG. 3 is an enlarged view illustrating part A of FIG. 2.

Referring to FIGS. 1 through 3, it can be seen that a plurality of antenna pattern radiators 220 and 320, according to an exemplary embodiment of the present invention, are applied to a case 120 for a mobile communications terminal 10. The electronic device may refer to every electronic device that employs an antenna, such as a laptop computer as well as a mobile communications terminal 10.

An antenna radiator 20, capable of receiving external signals of various bands, may be embedded in the mobile communications terminal 10.

The antenna radiator 20 may include two or more antenna pattern radiators 220 and 320, a bridge 300, and a cutting assistance part 350.

The antenna pattern radiators 220 and 320 may be embedded in the center or in the vicinity of the inner section of the electronic device case 120 by using the antenna pattern frame 200.

The antenna pattern radiators 220 and 320 respectively include antenna pattern portions 222 and 322 formed of a conductive material such as aluminum, copper or the like. The antenna pattern portions 222 and 322 serve to receive an external signal and send the received external signal to a signal processor of the electronic device 100. Furthermore, the antenna patter portions 222 and 322 may have different patterns to receive external signals having different bands.

The antenna pattern radiators 220 and 320 may respectively include connection terminal portions 224 and 324. The connection terminal portion 224 extends from one side of the antenna pattern portion 222, and the connection terminal portion 324 extends from one side of the antenna pattern portion 322. Here, a connection pattern portion 226 may connect the connection terminal portion 224 and the antenna pattern portion 222 to be arranged in different planes, and another connection pattern portion 326 may connect the connection terminal portion 324 and the antenna pattern portion 322 to be arranged in different planes.

The connection terminal portion 224 transmits the received external signals to the electronic device. The connection terminal portion 224 may be formed by bending, forming or drawing a portion of the antenna radiator 220. Alternatively, the connection terminal portion 224 may be manufactured separately from the antenna radiator 220 and be subsequently connected to the antenna radiator 220.

The bridge 300 may be formed to connect the antenna pattern portions 222 and 322 of the antenna pattern radiators 220 and 320.

The cutting assistance part 350 is formed at a portion where the bridge 300 is connected with the antenna pattern portions 222 and 322 in order to facilitate the detachment of the bridge 300 from the antenna pattern portions 222 and 322.

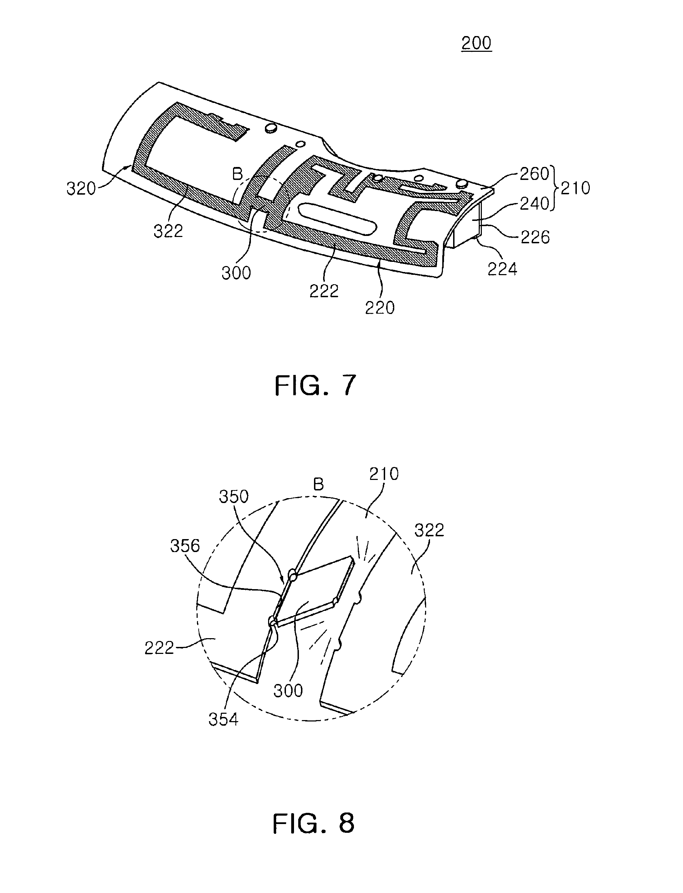

The cutting assistance part 350 may include a notch 352, and a relief groove 354 or a V-cut 356 (see FIG. 8) formed in each of the antenna pattern radiators 220 and 320. Alternatively, the cutting assistance part 350 may be formed by combining a portion or all of the notch 352, the relief groove 354 and the V-cut 356.

The antenna radiator 20 may be integrated with the case frame 120 after the bridge 300 is cut on the radiator frame 210.

FIG. 4 is an exploded perspective view illustrating an antenna pattern frame 200 according to an exemplary embodiment of the present invention.

The antenna pattern frame 210 may include a radiator frame 210 coupled with the antenna radiator 20.

Referring to FIG. 4, the antenna radiator 20 includes the antenna pattern portions 222 and 322 that are formed by subjecting a thin metal film to pressing-processing. Such antenna radiator 20 is bent or curved in such a way as to be fixed to one surface of the radiator frame 210.

In this case, a coupling groove 214 is formed in one surface 210a of the radiator frame 210, and the antenna pattern radiators 220 and 320 are coupled to the coupling groove 214 of the radiator frame 210 and exposed on the one surface 210a of the radiator frame 210.

The connection terminal portions 224 and 324 may be fixed to the opposite surface 210b of the one surface 210a of the radiator frame 210.

That is, the radiator frame 210 is an injection molded part. The antenna pattern portions 222 and 322 may be formed on the one surface 210a of the radiator frame 210, and the connection terminal portions 224 and 324 may be formed on the opposite surface 210b of the one surface 210a.

The radiator frame 210 may have a three-dimensional structure consisting of a straight portion 260 having a flat profile and a curved portion 240 with a curvature. The antenna radiator 20 may have flexibility such that the antenna radiator 20 can be disposed along the curved portion 240 of the radiator frame 210.

As for the structure of the antenna radiator 220 embedded in the electronic device case 120, the antenna pattern portions 222 and 322 receiving an external signal, and the connection terminal portions 224 and 324 transmitting external signals to a signal processor (not shown) of the electronic device may be arranged in different planes.

The one surface 210a of the radiator frame 210 where the antenna pattern portions 222 and 322 are formed is bonded to the inside of the electronic device case 120. In this way, an antenna pattern can be embedded in the electronic device case 120.

In order to prevent the interference between the antenna pattern portions 222 and 322, the bridge 350 can be removed from the radiator frame 210, thereby allowing for the reception or transmission of multiband signals.

Furthermore, the antenna pattern frame 200 is subjected to injection molding within a mold, so that an antenna pattern can be embedded in the electronic device case 120.

Accordingly, the antenna pattern frame 200 serves as a first injection molded part for embedding the radiators 220 and 320, respectively including the antenna pattern portions 222 and 324, in the electronic device case 120.

Furthermore, the antenna radiator 220 and the radiator frame 210 may have the same boundary, which increases the fluidity of materials, such as resin, during a second injection molding process in which the antenna pattern frame 200 is placed within the mold after the first injection molding process.

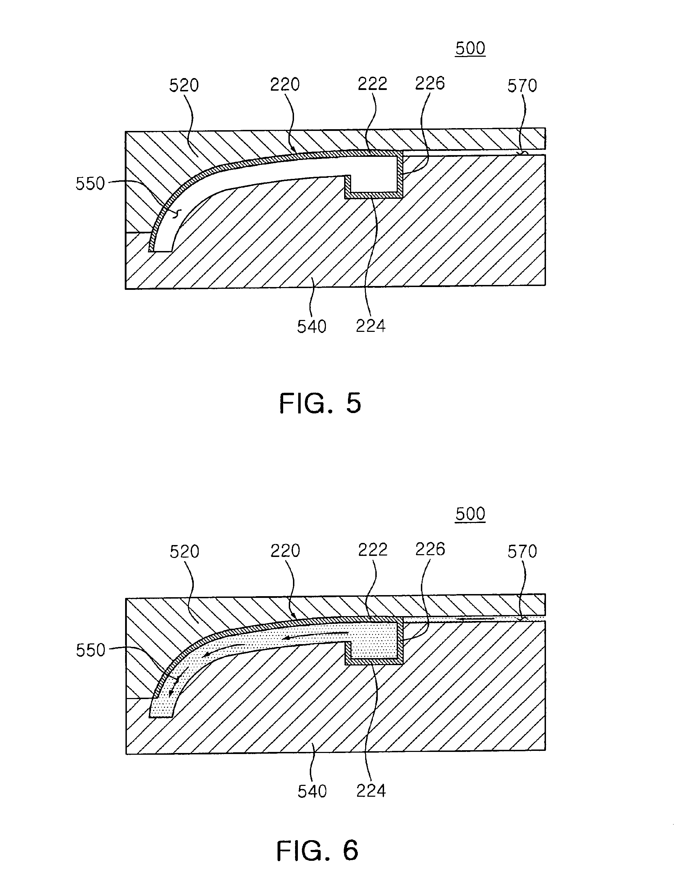

FIGS. 5 and 6 are schematic views illustrating a method of manufacturing an antenna pattern frame according to an exemplary embodiment of the present invention. FIG. 7 is a schematic perspective view illustrating an antenna pattern frame manufactured by the method of manufacturing an antenna pattern frame shown in FIGS. 5 and 6. FIG. 8 is a schematic enlarged view showing a bridge of an antenna pattern portion is detached in part B shown in FIG. 7.

Referring to FIGS. 5 through 8, a method of manufacturing an electronic device according to an exemplary embodiment of the present invention will now be described.

First, as in the description concerning FIG. 4, the antenna radiator 20, including the antenna pattern portions 222 and 322 formed by subjecting a thin metal film to pressing-processing, is formed.

The antenna radiator 20, according to this exemplary embodiment, may include the antenna pattern portions 222 and 322, the connection terminal portions 224 and 324, and the connection pattern portions 326 and 226 allowing the antenna patter portions 222 and 322 and the connection terminal portions 224 and 324 to be arranged in different planes.

The antenna radiator 20 is placed in a mold 500 for manufacturing an antenna pattern frame and is then injection molded, thereby forming the antenna pattern frame 200.

The mold 500 for manufacturing an antenna pattern frame includes an upper mold 520 and a lower mold 540. The antenna radiator 20 may be placed in an inner space 500 of the mold 500 such that the antenna pattern portion 222 comes into contact with the upper mold 520 and the connection terminal portion comes into contact with the lower mold 540. Here, the inner space 500 is created when the upper mold 520 and the lower mold 540 are joined.

Thereafter, a resin solution is injected through a resin material injection hole 570 formed in the mold 500 for manufacturing an antenna pattern frame, thereby forming the antenna pattern frame 200 as shown in FIG. 7.

The bridge 300 is removed from the antenna pattern frame 200, thereby spacing the antenna pattern radiators 220 and 320 apart from each other.

By forming a case frame 120 (see FIG. 1) on the antenna pattern radiators 220 and 320, the antenna pattern radiators 220 and 320 can be embedded between the radiator frame 210 and the case frame 120.

The case frame 120 may be formed to contact the one surface 210a of the radiator frame 210 on which the antenna pattern radiators 220 and 320 are exposed, or may be manufactured through double-molding structure by performing over-molding after the radiator frame 210 is placed in a mold for manufacturing an electronic device case.

As set forth above, in the antenna radiator, the method of manufacturing an electronic device case having a plurality of antenna pattern radiators embedded therein, and the electronic device case according to exemplary embodiments of the invention, a radiator including a plurality of antenna pattern portions can be embedded into an electronic device case, thereby solving existing external antennas' vulnerability to external impact, and an increase in the volume of existing internal type antennas.

Furthermore, since a plurality of antenna pattern radiators are embedded into an electronic device case, each of the antenna pattern radiators within the electronic device can transmit or receive a signal of a different band.

Also, since injection molding is performed in a state that the antenna pattern radiators are connected by a bridge, the injection molding process is more stable and an injection mold is simpler than when injection molding is performed on separated antenna pattern radiators.

In addition, if a method of pressing a thin metal plate is employed for the implementation of an antenna pattern, a single press mold may be used. Therefore, according to the present invention, even when a plurality of antenna patterns need to be formed, a plurality of press molds may not be required.

In the above manner, the method of manufacturing an electronic device including a plurality of antenna pattern radiators embedded therein is simplified, thereby achieving a reduction in manufacturing costs.

While the present invention has been shown and described in connection with the exemplary embodiments, it will be apparent to those skilled in the art that modifications and variations can be made without departing from the spirit and scope of the invention as defined by the appended claims.

## Claims

1. An antenna radiator comprising:
a plurality of antenna pattern radiators including antenna pattern portions receiving or transmitting an external signal, respectively;
a bridge configured to connect the antenna pattern portions; and
a cutting assistance part formed in a connection portion between the bridge and the antenna pattern portions and facilitating detachment of the bridge from the antenna pattern portions.

2. The antenna radiator of claim 1, wherein the cutting assistance part comprises a notch, a relief groove, a V-cut or a combination thereof.

3. The antenna radiator of claim 1, wherein each of the antenna pattern radiators comprises a connection terminal portion extending from one side of a corresponding one of the antenna pattern portions, and
the connection terminal portion and the antenna pattern portion are connected together by a connection pattern portion so as to be arranged in different planes.

4. The antenna radiator of claim 1, wherein the antenna pattern portions each receive or transmit a signal of a different frequency band.

5. A method of manufacturing an electronic device case having a plurality of antenna pattern radiators embedded therein, the method comprising:
forming a plurality of antenna pattern radiators by pressing-processing a thin metal film, the plurality of antenna pattern radiators respectively including antenna pattern portions connected by a bridge;
forming an antenna pattern frame including a radiator frame having one surface on which the antenna pattern radiators are exposed;
separating the antenna pattern radiators from each other on the radiator frame by removing the bridge; and
forming a case frame on the antenna pattern radiators such that the antenna pattern radiators are embedded between the radiator frame and the case frame.

6. The method of claim 5, wherein a cutting assistance part is formed in each connection portion between the bridge and the antenna pattern portions, and comprises a notch, a relief groove, a V-cut or a combination thereof to facilitate detachment of the bridge from the antenna pattern portions.

7. The method of claim 5, wherein each of the antenna pattern radiators comprises a connection terminal portion extending from one side of a corresponding one of the antenna pattern portions, and
the connection terminal portion and the antenna pattern portion are connected together by a connection pattern portion to be arranged in different planes.

8. The method of claim 5, wherein the antenna pattern portions each receive or transmit a signal of a different frequency band.

9. The method of claim 5, wherein the antenna pattern radiators are coupled to a coupling groove formed in the radiator frame, so as to be the antenna pattern radiators are exposed on the one surface of the radiator frame.

10. The method of claim 5, wherein the antenna pattern radiators are subjected to injection molding so as to be exposed on the one surface of the radiator frame.

11. The method of claim 5, wherein the case frame is injection molded over the radiator frame having the antenna pattern radiators exposed on the one surface thereof.

12. An electronic device case manufactured by the method of manufacturing an electronic device case according to any one of claims 5 to 11.
